# EUROPEAN PATENT APPLICATION

(11) **EP 1 626 332 A2**
(43) Date of publication of application: **15.02.2006**
(21) Application number: 05011154.1
(22) Date of filing: 23.05.2005
(51) Int. Cl.: G06F 3/06, G06F 13/10

(54) **Method of setting communication parameter between host system and peripheral device**

(30) Priority: 14.08.2004 KR 2004064129
(71) Applicant: SAMSUNG ELECTRONICS CO., LTD., Suwon-si, Gyeonggi-do (KR)
(72) Inventor: Choi, Ho-joong 249-801, Hwanggol Maeul, Suwon-si Gyeonggi-do (KR); Lee, Seok, Suwon-si Gyeonggi-do (KR); Ku, Young-min 158-1102, Hwanggol Maeul 1-danji Apt, Suwon-si Gyeonggi-do (KR)
(74) Representative: Grünecker, Kinkeldey, Stockmair & Schwanhäusser Anwaltssozietät

(57) **Abstract**

The present invention provides a method of setting a communication parameter between a host system and a peripheral device, the method including: preparing a plurality of tables having the communication parameter suitable to each of possible physical connection states between the host system and the peripheral device; and when the host system communicates with the peripheral device, selecting one of the plurality of tables depending on the physical connection state of the host system and the peripheral device to set the communication parameter.

## Description

The present invention relates to a method of setting a communication parameter between a host system and a peripheral device, and more particularly, to a method of setting a communication parameter between a host system and a peripheral device, in which an optimal communication parameter can be employed depending on a physical connection state of the host system and the peripheral device to ensure a signal integrity.

Disc drive for a Personal Computer (PC) is a recording/reproducing device used for information storage. Recently, together with a high capacity of the disc drive, a standard of a PC interface has been remarkably developed. Above 90% of the PC used today employs an ATA (AT Attachment) interface as a standard of interface for transferring data to a disc drive buffer and a memory.

The ATA is called AT-BUS or IDE (Integrated Drive Electronics), and is generally called AT. An exact denomination is the ATA on the basis of a standard of ANSI (American National Standards Institute). The IDE is a name of the company that invented the ATA. As an interface used before until the ATA was invented, there was ST-506. The ST-506 interface had a drawback in that it was at a high price due to a disc controller separately installed outside of the drive, and a noise was generated when a signal was propagated.

On the contrary, the ATA interface is reasonable in price since the ATA interface has a simple structure due to the disc controller installed inside the drive, and it has increased data reliability by solving the drawback of a noise generation.

As such, due to advantages of the ATA interface that it was easy to develop, it had high data reliability, and its price [is] was reasonable, the ATA interface become most-widely used in the latter half of the 1980's. Improved standards of the ATA were developed in the sequence of ATA-2, ATAPI, and Ultra ATA.

The ATA Peripheral Interface (ATAPI) solves a disadvantage that the ATA is just only for the hard disc drive. The ATAPI still supports an optical disc drive beside the hard disc drive.

The interface of the ATA-2 standard has a propagation rate of 16.7MB/s. In the ATA-2 standard, data can be propagated only at the rising time of a strobe signal since a processor needs a time to send a command to the disc controller for processing. Hard disc drive should wait until the host that is an interface controller sends a strobe signal.

However, in the Ultra ATA, on confirming whether or not a bus is in an idle state at a response requesting side, data propagation is initiated before an allowance of the processor. That is, a time (Propagation delay) taken to wait the strobe signal propagated from the host and a time (Return delay) taken to send data on the bus are all removed to increase a bus propagation speed. Further, a timing interval is improved and a new error correction way such as a Cyclical Redundancy Check (CRC) is used to enhance the preservation of data. That is, the Ultra ATA is an extended propagation standard of the ATA, and has a bandwidth of 33MB/s that is almost twice as much as a Direct Memory Access (DMA) mode.

Even after the appearance of Ultra DMA33, it is not easy to improve an internal speed of the hard disc drive. Therefore, the standard is improved to optimize a propagation speed under a limited protocol. As a result, Ultra DMA66 has been developed. An object of the Ultra DMA66 is to increase a propagation rate of a disc reading channel causing a bottleneck in a system performance. At the same time, the object of the Ultra DMA66 is to enhance the data reliability using the CRC (error inspection and correction). Further, the Ultra DMA66 is designed to change only the cable for a minimal equipment replacement, thereby allowing the protocol to have a lower-side compatibility.

The cable also uses forty pins in its entirety, but uses eighty lines in total, twice as much as before. The added forty lines act as a ground. The added lines do not propagate signals there through. In the Ultra DMA66, the propagation speed is increased twice as much as that of the Ultra DMA33. However, the increased propagation speed is applied only in a burst mode, and has a limitation in that the cable should have necessarily eighty pins, a total length must not be more than eighteen inches, and an interval between drives must not be more than six inches. As a matter of course, the longer the cable is, the higher a possibility of causing an error at the time of reading data is.

Meanwhile, besides a standard of interface, a data propagation mode of the hard disc drive is also advanced. As propagation modes in which the hard disc drive trans/receives data with a Central Processing Unit (CPU) of a main board, there are two main modes of a Programmed Input Output (PIO) mode and a DMA mode. In the PIO mode, data propagation between the hard disc drive and the main memory of the PC is performed using the CPU as a medium. In the DMA mode, a separate DMA controller chip directly propagates data to the memory without the intervention of the CPU.

In the PIO mode, all data should necessarily be processed in the processor and data is trans/received between devices of a computer. ATA/IDE standards regulate three PIO data propagation speeds, which are a mode 0 being a speed of 3.3 Mbytes/s, a mode 1 being a speed of 5.2Mbytes/s, and a mode 2 being a speed of 8.3Mbytes/s. A newer ATA-2 standard adds two high-speed modes, which are a mode 3 being 11.1 Mbytes/s and a mode 4 being 16.7Mbytes/s.

New alternative of the PIO is the DMA. The DMA is data propagation standard between the peripheral device and the system memory. The DMA can be classified into a single word DMA, a multi word DMA, and the Ultra DMA. Each of them defines mode depending on a propagation speed as in the PIO.

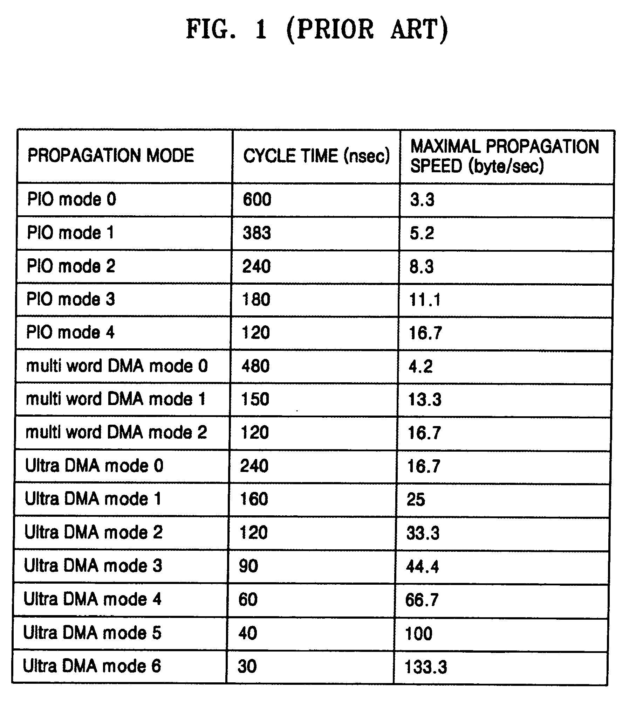

FIG. 1 illustrates a relation between a data propagation mode depending on a standard of the ATA (AT Attachment) interface, and a propagation speed. FIG. 1 illustrates the PIO, the multi-word DMA, and the Ultra DMA. Each of the data propagation modes is classified into a variety of detail modes.

Device using the ATA interface has drawbacks in that, as a frequency of a clock signal for an interface is increased, a timing margin is deficient and a noise level is increased, and as a rising time of a clock signal is less, an influence of an EMI emitting from a cable propagating the signal is increased. In order to solve the above drawback, it is required to optimize values of related communication parameters according to each of the data propagation modes.

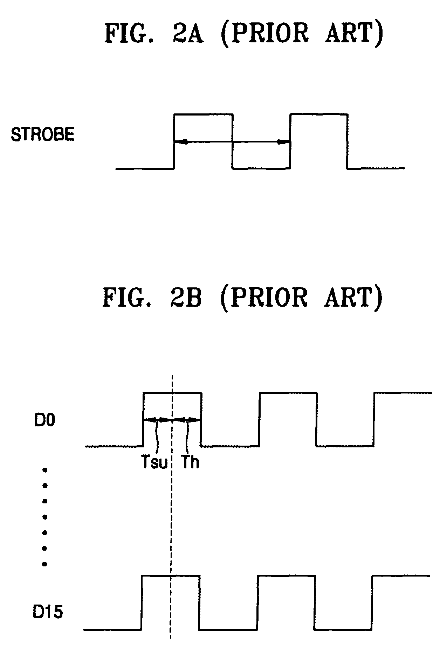

FIGS. 2A and 2B are timing diagrams illustrating data propagations in the Ultra DMA. FIG. 2A illustrates a timing of a strobe signal, and FIG. 2B is a timing of a data signal. In the Ultra DMA, data is received at a rising edge of and a falling edge of the strobe signal. A time from a start of the data signal up to the rising edge or the falling edge of the strobe signal is called a set up time (Tsu), and a time from the rising edge or the falling edge of the strobe signal to an end of the data signal is called a hold time (Th).

Further, a time between the rising edge of the data signal and the rising edge of the strobe signal is called a delay time. The delay time is set depending on a propagation delay degree of the signal.

In the device using the ATA interface, as the data propagation speed becomes larger, frequencies of the strobe signal and the data signal becomes larger accordingly. Accordingly, the strobe signal and the data signal have a deficient timing margin and a high noise level.

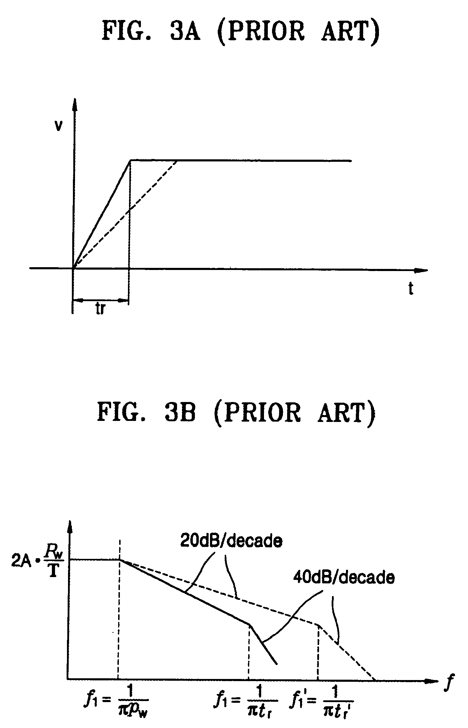

FIGS. 3A and 3B are graphs illustrating a relation of rising time (Tr) and harmonic frequency of the clock signal. In order to secure a timing of a high-speed communication, the rising time is faster and accordingly, a harmonic frequency noise is increased.

FIG. 3B is the graph illustrating the relation of the rising time and the harmonic frequency. In FIG. 3B, a Y-axis denotes a magnitude of the harmonic frequency, and an X-axis denotes the frequency of the harmonic frequency (or a degree of the harmonic frequency). "f1" is expressed as a reciprocal number of a width of a pulse signal. "f2" denotes a knee point, that is, the magnitude of the harmonic frequency beginning to fall at 40dB/decade, and is expressed as a reciprocal number of the rising time (Tr) of the pulse signal. As shown in FIG. 3B, as the rising time is faster (tr>tr'), the frequency of the knee point is high (f2<fr'), that is, the harmonic frequency is increased.

In a system using the ATA interface, since a host system transmits the signal to the device at the time of recording data, the communication parameter is set in the host system. Since the device transmits the signal to the host system at the time of playing data, the communication parameter is set in the device.

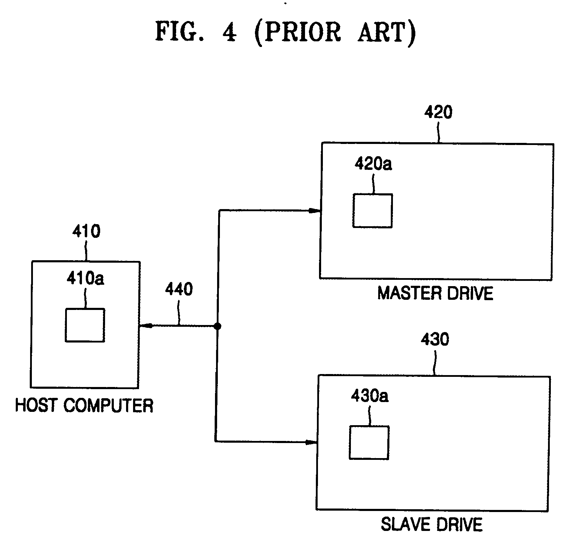

FIG. 4 is a view illustrating a conventional method of setting the communication parameter in a host computer and the hard disc drive. FIG. 4 illustrates the host computer 410 and two hard disc drives 420 and 430 connected through an ATA cable. The IDE controller can control the two hard disc drives at one time. Extended IDE (E-IDE) can install four drives.

If two or more drives can be installed through one cable, each of the drives should be set as a master drive or a slave drive. The slave drive has its own inactive controller, and is controlled by a controller of the master drive.

A dip switch installed at the drive is used to set master/slave to the drive, but the host computer can also set as disclosed in Korean Utility Model Publication No. 1998-0009505 (April 30, 1998) filed by this applicant.

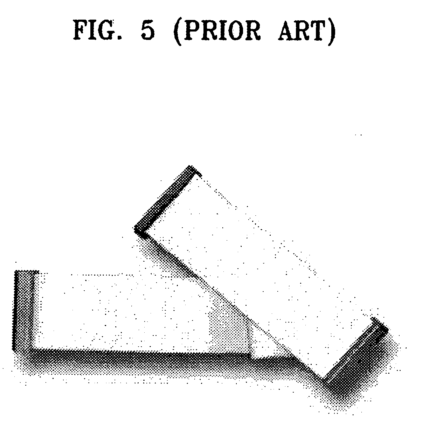

FIG. 5 is a view illustrating an exterior of the ATA cable. As an IDE cable (ribbon cable) connecting IDE devices and an IDE channel of a main board, there are ATA-33 having forty strands and ATA-66 (or ATA-100) having eighty lines. The ATA cable is comprised of all three connectors. An independently separated one of three connectors is connected to the main board. The ATA-66 (or ATA-100) cable has connectors positioned closely to one another. Among of the connectors, a master connector is positioned distantly from a main board connector and a slave connector is positioned at a center of the main board connector. On the contrary, the ATA-33 cable has a master connector at the center of a main board connector.

In the conventional communication method shown in FIG. 4, each of the drives and the host computer sets each of the communication parameters, that is, a slew-rate of the strobe signal, a slew-rate of the data signal, a delay and the like in such a manner that the host computer is connected with the drive in a slave mode. Herein, the slew-rate is a parameter of controlling the rising time. That is because in case where the host computer is connected and communicated with the drive in the slave mode, the propagated signal is most inferior in quality, and the communication parameters are set adaptively to the most inferior environment to secure a data reliability in a system configuration.

In detail, referring to FIG. 4, in case where the master and slave drives 420 and 430 transmit data to the host computer 430, the master drive 420 has a good condition due to its direct communication with the host computer 410, and on the other hand, the slave drive 430 has a bad condition due to its communication with the host computer 410 through the master drive 420. This is the same in case where the host computer 410 transmits data to the master and slave drives 420 and 430.

Accordingly, the slave mode in which the drive is connected with the host computer 410 is the most inferior environment. The communication parameters are set adaptively to the most inferior environment. In actual, the best condition is a case where the drive is singularly connected with the host computer 430, that is, a case where the drive is connected with the host computer 430 in a single mode.

Each of the host computer 410, the master drive 420, and the slave drive 430 includes tables 410a, 420a and 430a in which the communication parameter is recorded.

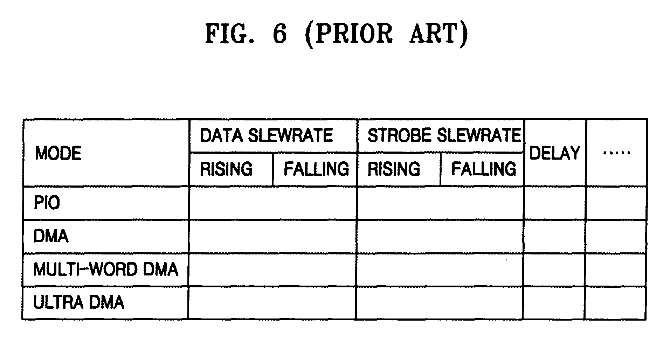

FIG. 6 is a view illustrating an example of a parameter table depending on the data communication mode.

As shown in FIG. 6, the parameter table records the slew-rate of the data signal, the slew-rate of the strobe signal, the delay time and the like in each data communication mode.

An optimal value of the communication parameter is different from each other depending on a physical connection state of the host computer 410 and the drives 420 and 430, that is, depending on the master mode or the slave mode. However, the conventional communication method has a drawback in that the optimal communication parameter cannot be set depending on the physical connection state since the communication parameter is uniformly set adaptively to the slave mode without referring to this difference.

On the other hand, U.S. Patent No. 6,249,708 (published on August 6, 2002) discloses a technology of varying a slew-rate depending on a data propagation state. In the above patent, when a host system communicates with a peripheral device, it is determined whether or not error is generated. If the error is generated, the slew-rate is variably controlled using a switch to promote signal integrity. However, the above patent discloses just only varying a given communication parameter adaptively to a propagation state of a signal, and does not disclose setting a proper communication parameter depending on a physical connection state.

It is the object of the present invention to provide a method of setting a communication parameter between a host system and a peripheral device in which the communication parameter can be set depending on a physical connection state of the host system and the peripheral device when the peripheral device communicates with the host system.

This object is solved by the subject matter of the independent claims.

Preferred embodiments are defined in the dependent claims.

According to an aspect of the present invention, there is provided a method of setting a communication parameter between a host system and a peripheral device, the method including: preparing a plurality of tables having the communication parameter suitable to each of possible physical connection states between the host system and the peripheral device; and when the host system communicates with the peripheral device, selecting one of the plurality of tables depending on the physical connection state of the host system and the peripheral device to set the communication parameter.

The tables may at least include: a master mode table corresponding to a mode in which the peripheral device is connected as a master drive to a host computer, and a slave mode table corresponding to a mode in which the peripheral device is connected as a slave drive to the host computer.

The above and other features and advantages of the present invention will become more apparent by describing in detail exemplary embodiments thereof with reference to the attached drawings in which:
FIG. 1 illustrates a relation between a data propagation mode depending on a standard of an ATA (AT Attachment) interface, and a propagation speed;
FIGS. 2A and 2B are timing diagrams illustrating data propagations in an Ultra DMA (Direct Memory Access);
FIGS. 3A and 3B are graphs illustrating a relation of a rising time (Tr) and a harmonic frequency of a clock signal;
FIG. 4 is a view illustrating a conventional method of setting a communication parameter in a host computer and a hard disc drive;
FIG. 5 is a view illustrating an exterior of an ATA cable;
FIG. 6 is a view illustrating an example of a parameter table depending on a data communication mode;
FIGS. 7A and 7B are a wave diagram and an EMI (Electromagnetic Interference) graph in case where a communication parameter suitable to a slave mode is applied to a single mode;
FIGS. 8A and 8B are a wave diagram and an EMI graph in case where a communication parameter suitable to a single mode is applied to the single mode;
FIG. 9 is a view illustrating a method of setting a communication parameter between a host system and a peripheral device according to the present invention;
FIG. 10 is a flowchart illustrating a method of setting a communication parameter in a disc drive according a preferred embodiment of the present invention; and
FIG. 11 is a flowchart illustrating a method of setting a communication parameter in a host computer according to a preferred embodiment of the present invention.

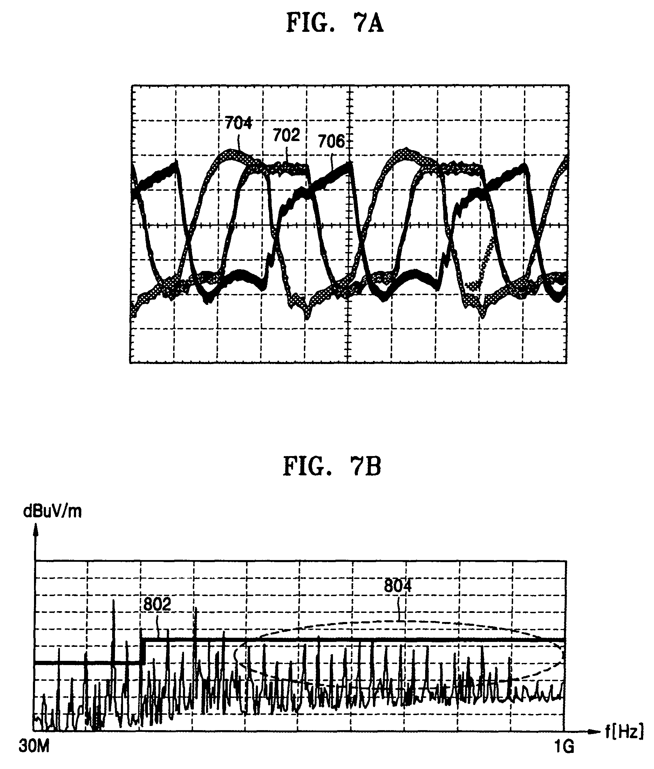

FIGS. 7A and 7B are a wave diagram and an EMI (Electromagnetic Interference) graph in case where a communication parameter suitable to a slave mode is applied to a single mode.

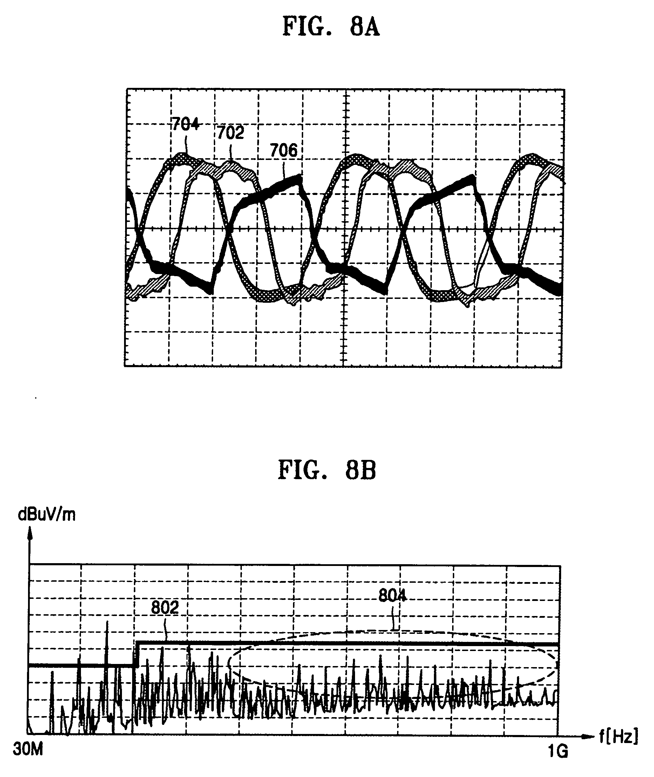

FIGS. 8A and 8B are a wave diagram and an EMI graph in case where a communication parameter suitable to the single mode is applied to the single mode.

The wave diagrams of FIGS. 7A and 8A illustrate a strobe signal 702, a first data signal 704 and a second data signal 706. The first data signal 704 and the second data signal 706 have a relation of inversion. In detail, any one of 16 bits of ATA data is the first data signal 704 and the other bits are the second data signal 706. 15 bits of data including first data, and second data are toggled oppositely to each other so that the second data is under the least poor condition to prepare the least poor condition for testing signal integrity.

In the EMI graphs of FIGS. 7B and 8B, a Y-axis denotes a magnitude of a harmonic frequency, and an X-axis denotes the harmonic frequency. A limited value of EMI is 40 dBuV/m at a low frequency of 30MHz to 230MHz on the basis of 3 meters of distance of an antenna, and is 47 dBuV/m at a high frequency of 230MHz to 1GHz. Lines 802 of FIGS. 7B and 8B represent the limited values of EMI at each of the frequencies.

Comparing FIGS. 7A and 8A, a setup time and a hold time are respectively 8.44 and 8.6, and 8.1 and 9.54 among the communication parameters suitable to the slave mode and the single mode.

Comparing FIGS. 7B and 8B, the magnitude of the harmonic frequency is greatly improved at an elliptical area, that is, at a high frequency of more than about 370MHz in FIG. 8B rather than FIG. 7A. FIGS. 7B and 8B show linear frequency divisions between 30MHz to 1GHz. EMI test is performed under the least poor condition under which the 16 bits of data signal are toggled together.

In other words, it can be appreciated that the communication parameters suitable to a physical mode of the host system are applied to more effectively ensure the signal integrity.

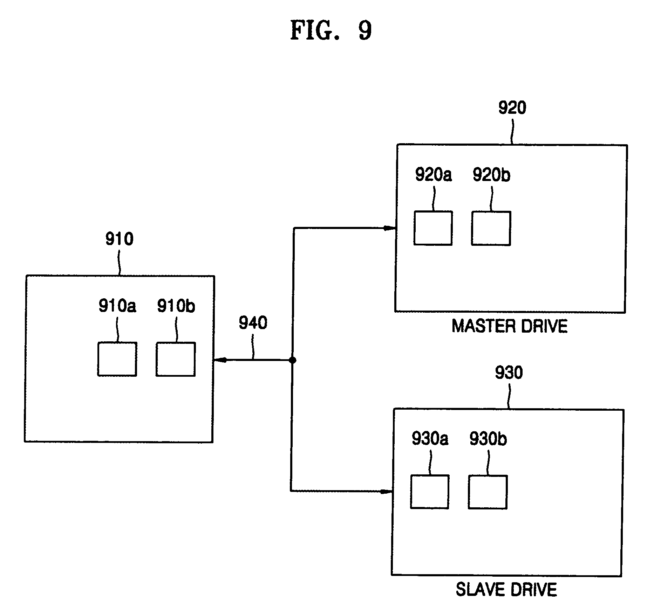

FIG. 9 is a view illustrating a method of setting the communication parameter between the host system and the peripheral device according to the present invention. FIG. 9 illustrates two hard disc drives 920 and 930 and the host computer 910 connected through an ATA cable.

The host computer 910, the master drive 920 and the slave drive 930 respectively include tables suitable to a plurality of physical modes. The host computer 910 includes the table 910a suitable to the master mode and the table 910b suitable to the slave mode. The master drive 920 includes the table 920a suitable to the master mode and the table 920b suitable to the slave mode. Further, the slave drive 930 includes the table 930a suitable to the master mode and the table 930b suitable to the slave mode.

In case where the master drive 920 propagates data to the host computer 910, the master drive 920 sets the communication parameter by using the table 920a suitable to the master mode. Comparing to this, in case where the slave drive 930 propagates data to the host computer 910, the slave drive 930 sets the communication parameter by using the table 930b suitable to the slave mode. Since each of the drives can be also used in both the master mode and the slave mode, each of the drives can have the plurality of tables.

Meanwhile, when the host computer 910 propagates data to the master drive 920, it sets the communication parameter by using the table 910a suitable to the master mode. When the host computer 910 propagates data to the slave drive 930, it sets the communication parameter by using the table 910b suitable to the slave mode.

The tables stored in the drive can be provided when the drive is manufactured. Comparing to this, in case where there is not the table having the set optimal communication parameters for each of the drives, the host computer 910 can use the table, which is set as a default.

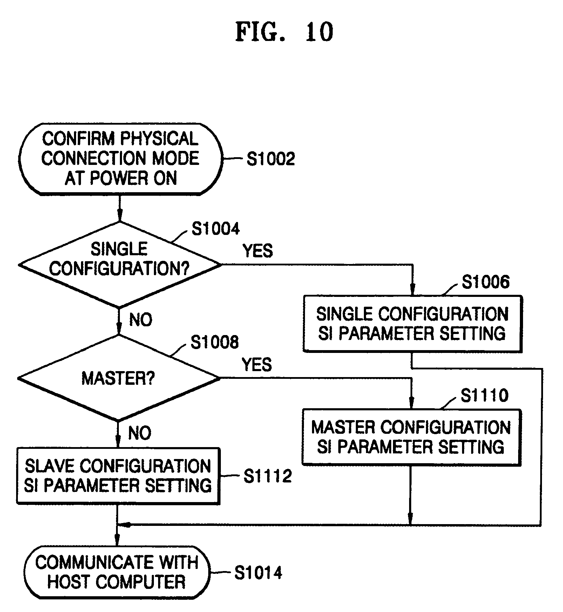

FIG. 10 is a flowchart illustrating a method of setting the communication parameter in the disc drive according a preferred embodiment of the present invention.

It is assumed that the hard disc drive includes the tables suitable to the single mode, the master mode and the slave mode.

When the hard disc drive communicates with the host computer, the hard disc drive confirms the physical connection state with the host computer (S1002). The physical connection state between the host computer and the hard disc drive is inspected when the host computer is booted. The hard disc drive can be confirmed regarding a connection state by inspecting its own dip switch state. In case where a cable select state is set by a dip switch, the master mode and the slave mode are established by the communication between the hard disc drives.

At power on, it is determined whether or not the drive is in the single mode (S1004). If it is determined that the drive is in the single mode as a result of the S1004, the single mode table is used to set the communication parameter (S1006).

If it is determined that the drive is not in the single mode as a result of the S1004, it is determined whether or not the drive is in the master mode (S1008). If it is determined that the drive is in the master mode as a result of the S1008, the master mode table is used to set the communication parameter (S1010).

If it is determined that the drive is not in the master mode as a result of the S1008, the slave mode table is used to set the communication parameter (S1212).

The drive communicates with the host system by the set communication parameter (S1014).

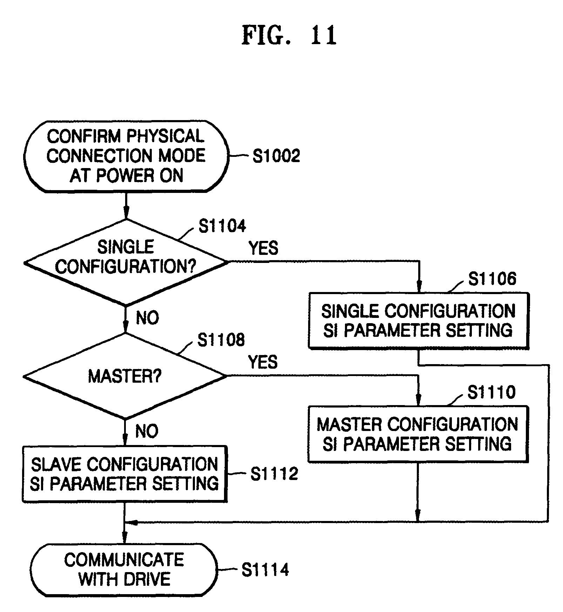

FIG. 11 is a flowchart illustrating a method of setting the communication parameter in the host computer according to a preferred embodiment of the present invention.

It is assumed that the host computer includes the tables suitable to the single mode, the master mode and the slave mode.

When the host computer communicates with the hard disc drive, the host computer confirms the physical connection state with the hard disc drive (S1102).

At the power on, it is determined whether or not the drive is in the single mode (S1104). If it is determined that the host computer is in the single mode as a result of the S1104, the single mode table is used to set the communication parameter (S1106).

If it is determined that the host computer is not in the single mode as a result of the S1104, it is determined whether or not the host computer is in the master mode (S1108). If it is determined that the host computer is in the master mode as a result of the S1108, the master mode table is used to set the communication parameter (S1110).

If it is determined that the host computer is not in the master mode as a result of the S1108, the slave mode table is used to set the communication parameter (S1112).

The host computer communicates with the drive by the set communication parameter (S1114).

As described above, the method of setting the communication parameter according to the present invention has an effect in that when the host computer is communicated with the peripheral device, the optimal communication parameters are set depending on the physical connection state to more effectively ensure the signal integrity, thereby reducing a logic error and reducing the EMI of the harmonic frequency generated at the cable.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of setting a communication parameter between a host system and a peripheral device, the method comprising:
preparing a plurality of tables having the communication parameter suitable to each of possible physical connection states between the host system and the peripheral device; and
when the host system communicates with the peripheral device, selecting one of the plurality of tables depending on the physical connection state of the host system and the peripheral device to set the communication parameter.

2. A method of setting a communication parameter in a hard disc drive communicating with a host system, the method comprising:
preparing a plurality of tables having the communication parameter suitable to each of physical connection states of the disc drive and the host system; and
when the drive communicates with the host system, selecting one of the plurality of tables depending on the physical connection state of the disc drive and the host system to set the communication parameter.

3. The method of claim 2, wherein the tables at least comprise:
a master mode table corresponding to a mode in which the disc drive is connected as a master drive to a host computer; and
a slave mode table corresponding to a mode in which the disc drive is connected as a slave drive to the host computer.

4. The method of claim 3, wherein the tables further comprise a single mode table corresponding to a mode in which the disc drive is connected as a single drive to the host computer.

5. The method of one of claims 2 to 4, wherein the communication parameter recorded in the table comprises a slew-rate of a strobe signal, a slew-rate of a data signal, and a delay time between the strobe signal and the data signal, which are used for an ATA, AT Attachment, interface or an ATAPI, ATA Peripheral Interface.

6. A method of setting a communication parameter in a host system connected to a disc drive, the method comprising:
preparing a plurality of tables having the communication parameter suitable to each of physical connection states of the host system and the disc drive; and
when the host system communicates with the disc drive, selecting one of the plurality of tables depending on the physical connection state of the host system and the disc drive to set the communication parameter.

7. The method of claim 6, wherein the tables at least comprise:
a master mode table corresponding to a mode in which the disc drive is connected as a master drive to a host computer; and
a slave mode table corresponding to a mode in which the disc drive is connected as a slave drive to the host computer.

8. The method of claim 7, wherein the tables further comprise a single mode table corresponding to a mode in which the disc drive is connected as a single drive to the host computer.

9. The method of one of claims 6 to 8, wherein the communication parameter recorded in the table comprises a slew-rate of a strobe signal, a slew-rate of a data signal, and a delay time between the strobe signal and the data signal, which are used for an ATA, AT Attachment, interface.

10. The method of one of claims 6 to 9, further comprising propagating the tables from the disc drive to the host system.
